(19) **Europäisches Patentamt**

**European Patent Office**

**Office européen des brevets**

(11) **EP 1 435 746 A1**

(12) **EUROPEAN PATENT APPLICATION**

(43) Date of publication:
07.07.2004 Bulletin 2004/28

(51) Int Cl.7: **H04Q 7/38**

(21) Application number: 02293273.5

(22) Date of filing: 31.12.2002

| | |
|---|---|
| (84) Designated Contracting States: **AT BE BG CH CY CZ DE DK EE ES FI FR GB GR IE IT LI LU MC NL PT SE SI SK TR** Designated Extension States: **AL LT LV MK RO** | • **Gonorovsky, Ilya** **East Bunswick NJ, 08816 (US)** • **Garani, Pradeep** **Bilekahalli, Bangalore 560076, (IN)** • **Vazquez Cortizo, David** **31100 Toulouse (FR)** • **Meidan, Reuven, c/o Motorola, EIPO** **Hampshire (GB)** |
| (71) Applicant: **MOTOROLA, INC.** **Schaumburg, IL 60196 (US)** | |
| (72) Inventors: • **Prost, Jean-Baptiste, c/o Motorola, EIPO** **Basingstoke, RG21 7PL ,Hampshire, (GB)** • **Abdesselem, Ouelid** **Toulouse 31000 (FR)** | (74) Representative: **Litchfield, Laura Marie** **Motorola European Intellectual Property Operations,** **Midpoint - Alencon Link** **Basingstoke, Hampshire RG21 7PL (GB)** |

(54) **System and method for channel allocation in a communication system**

(57) The invention relates to a system for allocating communication channels to communication units. A base station (201) comprises a communication channel allocator (215) that may allocate a communication channel to a first communication unit (205) for e.g. speech services. A speech interval controller (217) allocates the communication channel to a second communication unit (207) during a pause of the first communication unit (205). A speech detector (229) of the first communication unit (205) detects that speech is resumed and accordingly transmits a predetermined access message to the base station (201). The predetermined access message is common for all communication units of a cell and provides for reliable detection in the presence of transmissions from the second communication unit (207). In response to receiving an access message, a time slot controller (213) re-allocates the communication channel to the first communication unit (205). The invention is particularly applicable to cellular communication systems such as GSM/EDGE based communication systems.

FIG. 2

EP 1 435 746 A1

## Description

## Field of the invention

The invention relates to a communication system and method of channel allocation therefor and in particular to a cellular communication system.

## Background of the Invention

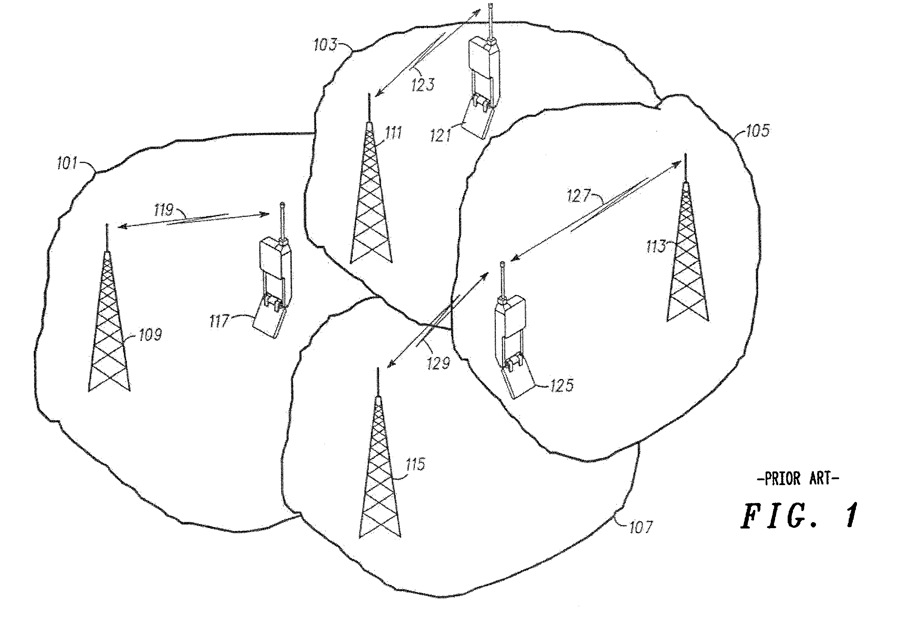

FIG. 1 illustrates the principle of a conventional cellular communication system 100 in accordance with prior art. A geographical region is divided into a number of cells 101, 103, 105, 107 each of which is served by base station 109, 111, 113, 115. The base stations are interconnected by a fixed network which can communicate data between the base stations 101, 103, 105, 107. A mobile station is served via a radio communication link by the base station of the cell within which the mobile station is situated. In the example if FIG. 1, mobile station 117 is served by base station 109 over radio link 119, mobile station 121 is served by base station 111 over radio link 123 and so on.

As a mobile station moves, it may move from the coverage of one base station to the coverage of another, i.e. from one cell to another. For example mobile station 125 is initially served by base station 113 over radio link 127. As it moves towards base station 115, it enters a region of overlapping coverage of the two base stations 111 and 113, and within this overlap region, it changes to be supported by base station 115 over radio link 129. As the mobile station 125 moves further into cell 107, it continues to be supported by base station 115. This is known as a handover or handoff of a mobile station between cells.

A typical cellular communication system extends coverage over typically an entire country and comprises hundred or even thousands of cells supporting thousands or even millions of mobile stations. Communication from a mobile station to a base station is known as uplink, and communication from a base station to a mobile station is known as downlink.

The fixed network interconnecting the base stations is operable to route data between any two base stations, thereby enabling a mobile station in a cell to communicate with a mobile station in any other cell. In addition, the fixed network comprises gateway functions for interconnecting to external networks such as the Public Switched Telephone Network (PSTN), thereby allowing mobile stations to communicate with landline telephones and other communication terminals connected by a landline. Furthermore, the fixed network comprises much of the functionality required for managing a conventional cellular communication network including functionality for routing data, admission control, resource allocation, subscriber billing, mobile station authentication etc.

Currently the most ubiquitous cellular communication system is the 2nd generation communication system known as the Global System for Mobile communication (GSM). GSM uses a technology known as Time Division Multiple Access (TDMA) wherein user separation is achieved by dividing frequency carriers into 8 discrete time slots, which individually can be allocated to a user. A base station may be allocated a single carrier or a plurality of carriers. One carrier is used for a pilot signal that further contains broadcast information. This carrier is used by mobile stations for measuring the signal level of transmissions from different base stations, and the obtained information is used for determining a suitable serving cell during initial access or handovers. Further description of the GSM TDMA communication system can be found in 'The GSM System for Mobile Communications' by Michel Mouly and Marie Bernadette Pautet, Bay Foreign Language Books, 1992, ISBN 2950719007.

To further enhance the services and performance of the GSM communication system, a number of enhancements and additions have been introduced to the GSM communication system over the years.

One such enhancement is the General Packet Radio System (GPRS), which is a system developed for enabling packet based communication in a GSM communication system. Thus, the GPRS system is compatible with the GSM system and provides a number of additional services including provision of packet data communication, which augments and complements the circuit switched communication of a traditional communication system. Furthermore, the packet based data communication may also support packet based speech services. The GPRS system has been standardised as an add-on to an existing GSM communication system, and can be introduced to an existing GSM communication system by introducing new network elements. Specifically, a number of Serving GPRS Support Nodes (SGSNs) and Gateway GPRS Support Nodes (GGSNs) may be introduced to provide a packet based fixed network communication.

Another enhancement is the Enhanced Data rates for GSM Evolution (EDGE) system, which comprises an air interface transmission protocol that uses a number of techniques to provide higher throughput over the air interface. Specifically, EDGE utilises higher order modulation schemes, channel adaptation, Automatic Repeat Request (QRQ) schemes and incremental redundancy to provide a high data throughput. Furthermore, EDGE is particularly suited for packet based communication over the air interface.

In particular, a radio access network known as a GERAN (GSM/EDGE Radio Access Network) has been standardised. The GERAN allows for traditional GSM services to be provided in addition to the enhanced services and performance provided by EDGE and GPRS.

In a typical two way speech conversation, voice activity of each user typically comprises only around 30% of the total time. Hence, a typical mobile station in a speech call on average only transmits speech data for approximately 30% of the time, and likewise typically only receives speech data for around 30% of the time. In order to increase battery life and reduce interference, a GSM mobile station or base station may during a speech pause enter a discontinuous transmission mode (DTX), wherein only a subset of the time slots are used for communicating data (SID frames). However, as the time slot is still allocated to the mobile station during the non-transmission time frames, no direct increase in the communication capacity of the communication system is achieved.

In order to increase the communication capacity of the system, it has for GERAN been suggested that the channel allocated to a speech service of a first mobile station may be temporarily allocated to a second mobile station during a speech pause of the first mobile station. However, in order for this to be feasible and advantageous, a fast re-allocation of the channel is required at the onset of the speech pause as well as at the end of the speech pause.

Accordingly, it has been proposed that when the speech pause ends, the first mobile station transmits an access message using the time slot of the communication channel. The access message depends on the mobile station and includes the identity of the mobile station. Typically, a collision will occur between transmissions of the first and second mobile station.

Furthermore, as the base station must recover the identity information comprised in the access message this must be received at a reasonable signal to noise ratio even in the presence of interference from the second mobile station. To improve detection, the access message is therefore transmitted at the highest available transmit power. This increases interference to other mobile stations and impedes the decoding of the message from the second mobile station. It furthermore creates a high probability that the receiver of the base station may be saturated thereby causing receiving errors.

Also, the base station accordingly needs to comprise circuitry for detecting a collision and for attempting to recover data of the transmissions despite the collision. However, this detection and resolution of a collision requires complex signal processing and has a relatively high error probability. In particular, although joint detection techniques for signals of unknown information content are known, these tend to have relatively high error probabilities and require complex signal processing thereby increasing complexity and cost of the base stations.

An improved system for channel allocation would be an advantage, and especially a system providing increased reliability, reduced interference, reduced complexity and/or improved error performance associated with communication of an access message would be advantageous.

**Summary of the Invention**

Accordingly, the Invention seeks to mitigate, alleviate or eliminate one or more of the above mentioned disadvantages singly or in any combination.

According to a first aspect of the invention, there is provided a communication system for supporting communication units over communication channels; the communication system comprising: means for allocating a first communication channel of a plurality of communication channels to a first communication unit for a data service; means for allocating the first communication channel to a second communication unit during a data pause of the first communication unit; means for the first communication unit to transmit an access message in response to detection of data activity; means for receiving the access message on the first communication channel; and means for re-allocating the first communication channel to the first communication unit in response to receiving the access message, wherein the access message is a predetermined access message common for a first group of communication units.

The group of communication units may specifically comprise all communication units of the communication system, and thus a single common predetermined access message may be used throughout the communication system. An originating communication unit may be determined in response to which communication channel the access message is received on.

As a common predetermined access message may be used, the requirement for detection of identity information can be avoided. This enables a system wherein a simple detection of a presence of an access message is sufficient, thus removing a requirement for decoding of data of the access message. Accordingly, an improved error performance may be achieved. Additionally, a reduced transmit power and thus interference may be achieved. The invention accordingly may also allow for simpler signal processing thus reducing complexity and cost.

Furthermore, using a common predetermined access message may not only increase reliability of detection of the access message but may also facilitate and improve detection of data of the transmission from the second communication unit. Specifically, joint detection may for example be improved by knowledge of the characteristics of the predetermined access message. Furthermore, the predetermined access message may be selected such as to facilitate the detection process thereby improving the decoding performance.

According to a feature of the invention, the data service is a speech service, the data pause is a speech pause and the data activity is speech activity. Speech services typically comprise significant pauses and accordingly the invention may specifically allow for an efficient and reliable method of using a communication channel during speech pauses with negligible impact on the speech service.

According to another feature of the invention, the communication system comprises a plurality of groups of communication units each having an associated common predetermined access message, and comprising means for selecting the access message from the plurality of common predetermined access messages.

The means for selection may for example be in the first communication unit and/or in the means for receiving the access message. Grouping of communication units into groups having common predetermined access messages allows for improved performance of the channel allocation as described above, yet allows for different access messages to be used, thus allowing optimisation for the specific characteristics associated with each group.

According to another feature of the invention, the communication system is a cellular communication system and each group of communication units comprises the communication units associated with a cell.

For example the access message used may depend on the serving cell of the first communication unit. Each group may for example comprise all communication units served by a given cell. This allows for improved performance as the receiving means have information of which access message out of the common predetermined access messages is used, yet allows for different access messages to be used in different cells thus reducing interference and the probability of detecting an access message from a corresponding communication channel in a different cell.

According to another feature of the invention, the means for selecting is operable to select an access message in response to a cell identification received from a base station of a serving cell.

For example, the first communication unit may select the access message from the plurality of predetermined access messages depending on the identity of the serving cell. For a GSM or GERAN based communication system the identity may specifically be the Base Station Identity Code (BSIC). This allows for a simple method of selecting the access message based on existing information.

According to another feature of the invention, the means for selecting is operable to select an access message in response to a known data sequence of the second communication unit. The access message may be selected as the most suitable access message with respect to the known data sequence thereby optimising performance.

According to another feature of the invention, the known data sequence is a training sequence. The access message may be selected to provide an optimised performance for the training sequence known to be included in a burst from the second communication unit.

According to another feature of the invention, the means for selecting are operable to determine the known data sequence from the cell identification. In many communication systems, the training sequence may be determined from the cell identification. Hence, a suitable access message for the given training sequence may be determined from the cell identification and thus performance may be improved without requiring additional information or signalling.

According to another feature of the invention, each cell has a single associated known data sequence. This allows for a single suitable access message to be determined based on existing information.

According to another feature of the invention, the means for receiving the access message is operable to detect the access message while receiving a transmission of the second communication unit.

Preferably, the receiving means comprises means for resolving collisions. For example, the receiving means may specifically be able to detect the presence of a signal signature corresponding to the selected access message in the presence of significant interference from the second communication unit. As another example, the receiving means may comprise functionality for performing joint detection of signals from the first and second communication unit. This allows for a reliable and efficient channel sharing scheme for the first communication channel between the first and second communication unit.

According to another feature of the invention, the means for receiving the access message is operable to decode the transmission of the second communication unit. This allows for the communication of the second communication unit to be supported in the presence of the access message thus reducing data loss.

According to another feature of the invention, the common predetermined access messages are associated with known data patterns of transmissions of communication units of the group associated with each common predetermined access message. Specifically, the predetermined access message may be chosen in response to the training sequence of each cell of a cellular communication system thus allowing for a suitable selection of predetermined access message.

According to another feature of the invention, the association between common predetermined access messages and the known data patterns are such that detection of common predetermined access messages in the presence of transmissions of other communication units are facilitated. The common predetermined access message for a given cell may be selected such that the detection of the access message during a collision with a transmission from another communication message is increased.

According to another feature of the invention, the association between common predetermined access messages and the known data patterns are such that a deterioration of a decode ability on the data from the second communication unit is reduced. This allows for the data loss of the communication of the second communication unit to be reduced.

According to another feature of the invention, the association between common predetermined access messages and the known data patterns are such that correlation between a common predetermined access message and transmissions of communication units is lowest for the group of communication units associated with the common predetermined access message.

Specifically, the access message of a cell of a cellular communication system may be selected such that the correlation with a known data sequence, e.g. a training sequence, of communication units in that cell is lower than for other cells. The access message may be selected to minimise the correlation between the access message and known data sequences of the transmissions of the group of communication units. This increases the detection probability and reduces the error rate.

According to another feature of the invention, the common predetermined access messages comprise a first part associated with the known data patterns and a second part associated with an unknown data part of transmissions of communication units of the group associated with each common predetermined access message. Specifically, the known data patterns may be training sequences.

In communication systems such as GSM and GERAN, data transmissions comprise data portion(s) and training sequences. The access message may be divided accordingly. This increases the detection probability and reduces the error rate.

According to another feature of the invention, the access message comprises a substantially sinusoidal signal. Specifically, the access message may consist in a substantially sinusoidal signal. Preferably the substantially sinusoidal signal is generated by a temporally limited signal having constant phase rotation for the modulation used in the system. Specifically, a continuous rotation between consecutive symbols of a symbol constellation may be used. A sinusoidal signal is easy to generate and to detect. Hence, this allows for a simple access message with high performance.

According to another feature of the invention, the access message comprises no information. This improves detection probability as the access message is fully known and therefore the detection process can be optimised for the specific characteristics of the access message.

According to another feature of the invention, the communication system further comprises means for setting a transmit power of the access message in response to a transmit power of a previous communication from the first communication unit.

Typically, data pauses (including speech pauses) are of relatively short duration and the propagation conditions for the access message will often be correlated with the propagation conditions of a previous communication. The access message is therefore typically likely to experience a similar attenuation as a previous communication. Setting the transmit power accordingly will increase probability of the signal being received at an appropriate signal level, reduce the problem of saturation of the receiver, increase the probability of reliable detection and/or reduce interference in the system. The previous communication may specifically be the last communication prior to the data pause.

According to another feature of the invention, the communication system further comprises means for setting a receive characteristic for the means for receiving the access message to a level determined for a previous communication from the first communication unit. The receive characteristic may be a detection characteristic. This allows for an appropriate initial receive level setting thus improving reception and detection of the access message.

According to another feature of the invention, the communication system further comprises means for setting a transmit power of the second communication unit in response to the receive characteristic for the means for receiving the access message. This allows for an appropriate receive level for the transmission from the second communication unit, and allows the receive level to be compatible with a receive level of a potential access message thus improving reception and detection of the transmission of the second communication unit.

According to another feature of the invention, the means for the first communication unit to transmit an access message is operable to transmit a plurality of access messages. This allows for an increased detection probability. For example, if the first access message is not received, a subsequent access message may be received causing the first communication channel to be re-allocated.

According to another feature of the invention, the means receiving the access message is operable to combine a plurality of access messages.

This allows for an increased detection probability. For example, the detection functionality may not be able to determine if an access message has been received during a first interval. However, by including detection results from a second time interval, the combined detection probability may be increased such that a detection decision can be made.

According to another feature of the invention, the first communication channel is a time division multiple access (TDMA) communication channel.

Each of the plurality of communication channels may specifically be a given time slot in a TDMA frame. The invention may thus advantageously be applied in a TDMA based communication system.

According to another feature of the invention, the TDMA communication channel comprises a Global System for Mobile communication (GSM) time slot structure. Hence, the invention may advantageously be applied to systems based on a GSM time slot structure.

It may thus be advantageously applied to GSM related systems such as GSM, GPRS, EDGE and GERAN.

According to a second aspect of the invention, there is provided: a communication unit for a communication system supporting communication units over communication channels; the communication unit comprising: means receiving an allocation of a first communication channel of a plurality of communication channels for a data service; means for releasing the first communication channel to a second communication unit during a data pause of the communication unit; means for transmitting an access message in response to detection of activity; means for resuming data communication on the first communication channel, wherein the access message is a predetermined access message common for a first group of communication units.

According to another feature of the invention, the communication unit further comprises means for selecting the access message from a plurality of predetermined access messages in response to a cell identification received from a base station of a serving cell.

According to another feature of the invention, the communication unit further comprises means for setting a transmit power of the access message in response to a transmit power of a previous communication from the communication unit.

According to a third aspect of the invention, there is provided a base station for a cellular communication system supporting communication units over communication channels; the base station comprising: means for transmitting an allocation of a first communication channel of a plurality of communication channels to a first communication unit for a data service; means for receiving a communication on the first communication channel from a second communication unit during a data pause of the first communication unit; means for receiving a activity access message from the first communication unit; and means for re-allocating a receiver function associated with the first communication channel to the first communication unit in response to receiving the access message; wherein the access message is a predetermined access message common for a first group of communication units.

According to a fourth aspect of the invention, there is provided, a method of channel allocation for a communication system supporting communication units over communication channels; the communication system comprising: allocating a first communication channel of a plurality of communication channels to a first communication unit for a data service; allocating the first communication channel to a second communication unit during a data pause of the first communication unit; transmitting an access message from the first communication unit in response to detection of activity; receiving the access message on the first communication channel; and re-allocating the first communication channel to the first communication unit in response to receiving the access message, wherein the access message is a predetermined access message common for a first group of communication units.

These and other aspects of the invention will be apparent from and elucidated with reference to the embodiment(s) described hereinafter.

## Brief Description of the Drawings

An embodiment of the invention will be described, by way of example only, with reference to the drawings, in which

FIG. 1 is an illustration of a cellular communication system in accordance with the prior art;

FIG. 2 is an illustration of a communication system in accordance with an embodiment of the invention; and

FIG. 3 illustrates the structure of a transmission from a communication unit and an access message in accordance with an embodiment of the invention.

## Detailed Description of a Preferred Embodiment of the Invention

The following description focuses on an embodiment for a communication system comprising a GSM/EDGE Radio Access Network (GERAN). However, it will be apparent that the invention is not limited to this application but may be applicable to many other communication systems.

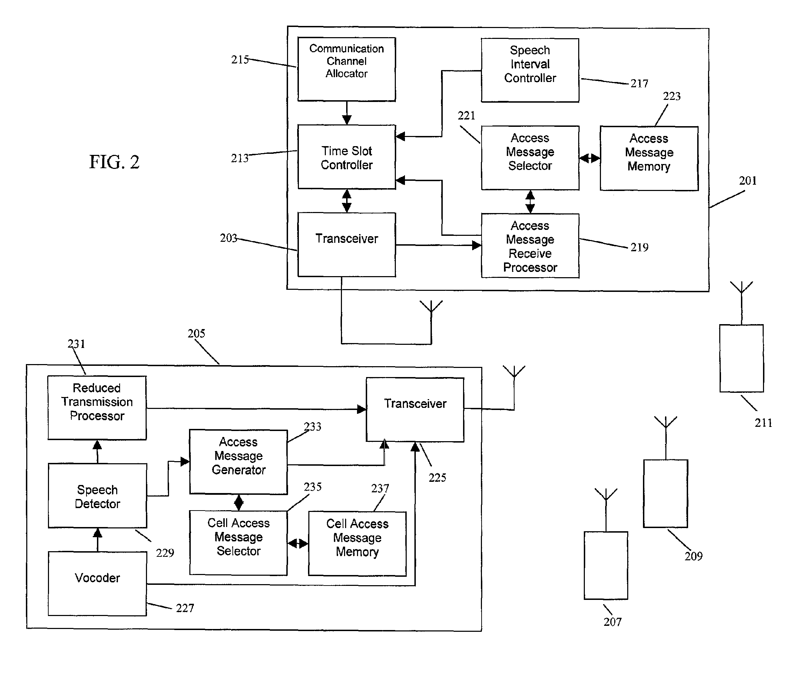

FIG. 2 is an illustration of a communication system in accordance with an embodiment of the invention.

The communication system of FIG. 2 is a cellular communication system comprising a plurality of base stations, base station controllers, mobile switching centre(s), SGSN and GGSNs etc as is well known in the art. For clarity and brevity, FIG. 2 illustrates only one base station 201 of the fixed network.

The base station 201 comprises a transceiver 203, which is operable to communicate with a plurality of communication units in accordance with a GERAN air interface protocol. In the shown example, the base station is currently supporting four communication units 205, 207, 209, 211. A communication unit may specifically be a subscriber unit, a wireless user equipment, a mobile station, a communication terminal, a personal digital assistant, a laptop computer, an embedded communication processor or any other communication unit capable of communicating over the air interface.

The transceiver 203 comprises a receiver, a transmitter and all functionality required for communicating in accordance with the GERAN protocol. The transceiver 203 is connected to a time slot controller 213 that controls which information is transmitted in each time slot. In a GERAN system, a subscriber unit is allocated a communication channel by being allocated a timeslot number of each frame. In the described example, the time slot controller 213 provides control signals to the transceiver 203 indicating for example which user a specific time slot is allocated to.

The time slot controller 213 is connected to a communication channel allocator 215. The communication channel allocator 215 allocates communication channels to communication units, and specifically it is operable to allocate a first communication channel to a first communication unit 205 for providing a data service. In the preferred embodiment, the data service is a speech data service, and the communication channel allocator 215 specifically allocates a time slot number of a time frame of a carrier of the transceiver to the speech service of the first communication unit 205.

It will be well known to the person skilled in the art, that the radio resource management, and thus the allocation of communication channels to communication units, in many communication systems may be allocated in other elements than a base station. For example, typically for GSM and GERAN systems, the radio resource management is performed in the Base Station Controllers. The allocation performed by the communication channel allocator 215 may therefore specifically consist in receiving the communication channel allocation information from another unit and supplying the information to the time slot controller 213. In the preferred embodiment, the communication channel allocator 215 allocates a carrier and a specific time slot of the eight time slots available for the carrier. For clarity, the communication channel allocator 215 is in the described example shown to be included in the base station 201.

The time slot controller 213 is further connected to a speech interval controller 217, which is operable to allocate a communication channel already in use for a speech service to a second communication unit for use during silence periods of the speech service. Hence, the communication channel allocator 215 may allocate a first communication channel to a first communication unit 205 for a speech service, and the speech interval controller 217 may allocate the same communication channel to a second communication unit 207 for use during one or more silence periods of the first communication unit 205. In the preferred embodiment only the uplink communication channel between the first communication unit and the base station 201 is re-allocated to the second communication unit. In this embodiment, the downlink time slots remain allocated to the first communication unit.

Accordingly, the time slot controller 213 may allocate a given time slot to the first 205 or second communication unit 207 depending on whether a user of the first communication unit 205 is currently actively speaking.

The time slot controller 213 further controls the transceiver 203 to transmit control signals to at least the second communication unit 207 to provide information that it may transmit on the first communication channel.

The second communication unit continuously listens to a communication channel used by the base station to convey these control signals.

The base station 201 also comprises an access message receive processor 219 coupled to the time slot controller 213 and the transceiver 203. The access message receive processor 219 monitors the received signal during time slots of the first communication channel in order to detect any access messages. In the preferred embodiment, the transceiver 203 is operable to receive and decode data of the communication from the second communication unit 207, and during the same time slot providing a base band receive signal to the access message receive processor 219 for detection of the presence of access messages. In the preferred embodiment, the process of receiving the data of the transmissions of the second communication unit 207 and the detection process of access messages during the same time slot are thus separate processes. However, in other embodiments, the processes are integrated and may thus be performed in the transceiver 203 or the access message receive processor 219 or be distributed over these and other functional blocks. An example of such an integrated process is a joint detection of the data message from the second communication unit 207 and the access message.

In the preferred embodiment, the access message is a predetermined access message. The access message receive processor 219 detects the presence of an access message by comparing the received signal with a local stored version of the predetermined access message. Specifically, the access message receive processor 219 is connected to an access message selector 221 which selects the appropriate predetermined access message from an access memory storage 223. In the preferred embodiment, a common access message is used for all communication units of a cell, and the access message selector 221 and access memory processor 223 may simply consist in a memory location from which the access message receive processor 219 retrieves the common predetermined access message. The access message receive processor 219 then determines the presence of an access message by correlating the received signal with the locally stored access message. If the correlation is above a given threshold, it is determined that an access message has been received. The correlation is preferably performed in the base band domain but it is within the contemplation that any suitable method for detecting the access message may be used.

If an access message is detected, this information is fed to the time slot controller 213. In response, the time slot controller 213 reallocates the time slots of the communication channel to the first communication unit 205 and communicates this re-allocation to both the first communication unit 205 and to any other communication unit 207 that may be using that communication channel. It furthermore, provides the information to the speech interval controller 217. The speech interval controller 217 then proceeds to monitor for the next speech pause suitable for re-allocating the first communication channel to the second communication unit 207.

At least some of the communication units of the communication system of FIG. 2 comprise functionality for transmitting access messages. Specifically, FIG. 2 illustrates the functionality of a first communication unit 205.

The first communication unit 205 comprises a transceiver 225 which is operable to communicate with the base station 201 in accordance with the appropriate GERAN protocol. In the preferred embodiment, the first communication unit 205 is operable to communicate with the base station 201 using both standard GSM and EDGE communication protocols.

The first communication unit 205 receives a voice input from a user. The voice input is fed to a vocoder 227 connected to the transceiver 225. The vocoded signal may be transmitted to the base station 201 over the communication channel whereby a speech communication is effected. The communication channel is specifically the carrier and time slot allocated by the communication channel allocator 215.

The vocoder 227 is further connected to a speech detector 229, which evaluates the output signal of the vocoder 227 in order to detect whether the generated signal comprises speech or is representative of background noise. Hence, the speech detector 229 determines whether the user of the first communication unit 205 is currently speaking, or whether there is a speech pause.

The speech detector 229 is connected to a reduced transmission processor 231, which is further connected to the transceiver 225. When the speech detector detects a speech pause, it transmits a control signal to the reduced transmission processor 231. In response to this signal, the reduced transmission processor 231 enters the first communication unit 205 into a reduced transmission mode. Specifically, the first communication unit 205 is entered into a discontinuous transmission mode (DTX) such as that known from GSM. In this mode, the reduced transmission processor 231 controls the transceiver 225 such that no or only a subset of the time slots are used for transmitting data to the base station 201. In particular, only silence descriptor data (SID frames) are transmitted.

When the first communication unit 205 enters the reduced transmission mode, this is detected by the speech interval controller 217 of the base station, which controls the time slot controller 213 to re-allocate the unused time slots to the second different communication unit 207.

The speech detector 229 is further connected to an access message processor 233, which is further connected to the transceiver 225. When the speech detector 229 determines that the speech pause has ended, and thus that the vocoder 227 is generating actual speech data rather than background noise, a control signal is fed to the access message processor 233. In response, the access message generator 233 generates an access message and feeds this to the transceiver 225. The access message is transmitted to the base station 201 during a time slot of the first communication channel thereby causing a possible collision with a transmission of the second communication unit 207.

In a very simple embodiment, a predetermined access message, which is common for all cells and all communication units, is used. In this case, the access message processor 233 simply generates an access message by retrieving the predetermined access message from a memory location.

However, in the preferred embodiment, the communication units of the communication system are divided into different groups with a different predetermined access message defined for each group. Specifically, each group corresponds to a cell. Thus in the preferred embodiment, one predetermined access message is defined for each base station. All communication units within that cell will use the predetermined access message of that cell. In the preferred embodiment, the neighbour cells will have different predetermined access messages used by communication units of these cells. Accordingly, differentiation between access messages of different cells is improved and the probability of falsely detecting an access message of a neighbouring cell is significantly reduced. Thus, the access message used by a communication unit depends on the serving base station.

Hence, each of a plurality of groups of communication units corresponding to the communication units of the different cells have an associated common predetermined access message, and the communication units comprise means for selecting the access message from the plurality of common predetermined access messages. Specifically, the access message processor 233 of FIG. 2 is coupled to a cell access message selector 235 which is operable to select the appropriate access message and feed this to the access message processor 233. The cell access message selector 235 is coupled to a cell access message memory 237 which comprises an access message for each cell.

In the preferred embodiment, the transceiver 225 receives a cell identification from the base station 201. The cell identification may specifically be the Base Station Identity Code (BSIC) broadcast by GERAN base stations. The BSIC is fed to the access message processor 233 and from there to the cell access message selector 235. The cell access message memory 237 comprises a look up table with an entry for each possible BSIC. The look up table comprises the predetermined access message for each BSIC. Hence, the cell access message selector 235 selects the access message by retrieving the access message entry corresponding to the received BSIC from the look-up table. The selected access message is then fed to the access message processor 233 which generates the transmitted access message and controls the transceiver 225 to transmit it to the base station 201 during a time slot of the first communication channel.

In the preferred embodiment, there is thus a one to one relationship between a cell identity and the associated predetermined access message. Thus each cell preferably has a single associated known data sequence. However, there is not necessarily a one to one relationship between the associated predetermined access message and the cell identity. Thus different cells of the communication system may have identical predetermined access messages. Preferably, the access messages are allocated such that neighbour cells have different access messages thereby reducing the probability of an access message of a neighbour cell falsely being detected.

In other embodiments, a cell may have a plurality of predetermined access messages, and the cell access message selector 235 may select one of these according to a second criterion. Specifically, the access message may be selected in response to a known data sequence of the second communication unit 207. Specifically, the known data may be a training sequence. Thus different training sequences may be used for communication within a cell and a predetermined access message may be determined for each possible training sequence. In this case, the cell access message selector 235 selects the access message corresponding to the determined BSIC, and a determination of the training sequence used by the second communication. This determination may for example be based on knowledge of the allocation of training sequences within a cell. For example, a given training sequence may be used for each carrier and thus the training sequence may be determined in response to which carrier the first communication channel is allocated on.

When the base station 201 receives the access message, it re-allocates the communication channel to the first communication unit 205. Specifically, the base station transmits a re-allocation message to any communication unit that is using the communication channel during the speech pause, and eventually to the first communication unit 205.

When the first communication unit 205 receives the re-allocation message, it exits the reduced transmission mode and proceeds by transmitting the speech signal from the vocoder 227.

Alternatively, the first communication unit may resume service by simply proceeding with transmitting the speech signal without further signalling. In this case, the only signalling performed by the base station 201 may be to terminate the communication from the second communication unit 207.

Hence, in the preferred embodiment predetermined access messages are advantageously used to control channel allocation and sharing between two communication units. The predetermined access messages are common for a group of communication units and specifically all communication units of a cell. Hence, a simple and reliable detection of access messages are enabled avoiding a requirement to decode specific data of the access messages. Indeed, in the preferred embodiment the access messages comprise no information data.

Preferably, the common predetermined access messages are associated with known data patterns of transmissions of communication units of the group associated with each common predetermined access message. Specifically, the access messages depend on the training data used by the second communication unit. The common predetermined access messages and the known data patterns are associated in such a way that detection of common predetermined access messages in the presence of transmissions of other communication units is facilitated.

Specifically, the predetermined access messages are preferably differentiated as much as possible from the transmissions of the second communication unit. As the second communication unit is transmitting user data, the characteristics of the transmissions are not fully known. However, for example for a GERAN system, the transmissions comprise training sequences which are known, and the predetermined access messages therefore preferably differentiate as much as possible from the training sequences.

Hence, in the preferred embodiment, the access message is designed to maximize the detection probability of the access message and the successful decoding of the transmission of the second communication unit. For example, the base station may perform joint detection of the access message and the transmission from the second communication unit. Any suitable known joint detection algorithm may be used without detracting from the invention.

The access message is thus preferably chosen such as to interfere as little as possible with the transmissions of the second communication unit. For most detection schemes and in particular for joint detection algorithms (e.g. based on a Least Mean Square estimation of the channel applied to both received transmissions as is well known in the art), the criterion to minimize is the correlation between the two signals over the range of delays introduced by the time of arrival discrepancies and the spread of the symbols due to the channel effects. Hence, preferably, the association between the common predetermined access messages and the known data patterns are such that correlation between a common predetermined access message and transmissions of communication units is lowest for the group of communication units associated with the common predetermined access message.

If $S_1(t)$ is the signal emitted by the first communication unit (the access message) and $S_2(t)$ the signal emitted by the second communication unit, the correlation is given by

$$Corr_{1,2}(\tau) = \int S_1(t).S_2(\tau+t)$$

The criterion to minimise may be given by

$$C = \sum_{\tau=-T}^{T} Corr_{1,2}(\tau)$$

where T is a maximum delay spread of the communication channel. Typically, T may be set to a value of between 5 and 10 symbol periods.

If $s_2(t)$ is fully known (typically if the data sequence of $s_2(t)$ is known), it is possible (by using a Viterbi based algorithm) to derive the optimal access message that will overlap this signal. However, for communication systems such as GERAN the transmissions of the second communication unit comprise a first part with known data pattern, the training sequence, plus a second part with an unknown data sequence, the user data part. Accordingly, the criterion C is specifically applied to a section of the access message likely to overlap the training sequence of the transmission of the second communication unit.

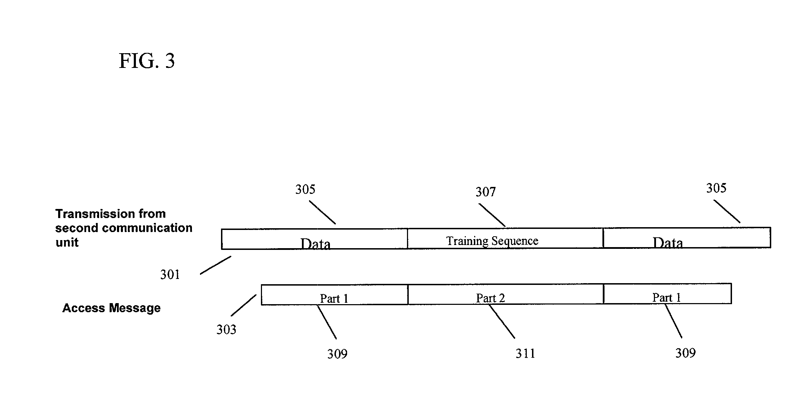

FIG. 3 illustrates the structure of a transmission 301 from the second communication unit 207 and an access message 303 in accordance with an embodiment of the invention. The transmission 301 comprises a first part 305 (of two sections) wherein user data is known. Hence, the exact characteristics of this part are not known. Additionally, the transmission 301 comprises a training sequence 307 with known data.

In the preferred embodiment, the access message is similarly divided into a first part 309 associated with the unknown data part 305 of the transmission 301, and a second part 311 associated with the known data patterns of the training sequence 307. Part 2 311 of the access message is predetermined such that it has a low correlation with the training sequence 307 and specifically such that the criterion C given above is minimised. If more than one training sequence may be used by the second communication unit 207, for example if a plurality of training sequences are used within each cell, the correlation criterion C is preferably averaged over all possible training sequences, and thus the best differentiation on average is achieved. However, preferably a single training sequence is used in each cell.

Part 1 309 of the access message is predetermined such that it has a low average correlation over the possible data values of the user data. Specifically, it comprises a substantially sinusoidal signal. For GERAN systems, the sinusoidal signal may preferably be generated by employing a rotation between constellation points of the symbol constellation. For GMSK, this may be achieved with a 1, -1, 1, -1,... sequence, which in a GERAN system will result in a sine wave +/- 67.7 kHz from the centre of the frequency channel. Using 8-PSK modulation, the different constellation rotation rates may specifically in GERAN systems generate sine waves +/- 16.9, +/- 50.7 and +/- 84.6 kHz from the centre of the frequency channel.

Sinusoidal waves provide good average correlation properties and are simple to detect reliably. In some embodiments, the entire access message may simply consist in a sine wave. This access message may simply be detected by a narrowband filter.

In the preferred embodiment, the first communication unit 205 further comprises means for setting a transmit power of the access message in response to a transmit power of a previous communication from the first communication unit. Hence, in the preferred embodiment, the transceiver 225 stores the transmit power setting of the transmissions to the base station. When a speech pause is entered, the transmit power of the last communication is thus stored. On transmission of the access message, the transceiver retrieves the transmit power setting from memory and sets the transmit power output level accordingly. The transceiver may use the retrieved value directly or may modify it by a corrective value, for example based on channel estimates or measurements performed during the speech pause. Hence, unless the propagation characteristics have changed substantially, it is ensured that the access message is received at a suitable signal level.

The base station comprises means for setting a receive characteristic to a level determined for a previous communication from the first communication unit. Specifically, the receive gain of the transceiver is set dependent on the last value used when receiving communication from the first communication unit. The receive gain may be set to the same value or a corrective factor may be added. As the transmit power is set to the value of the last transmission, it is likely that the access message is received at a comparable level and the receive gain will therefore be preset to an appropriate level.

Furthermore, the base station 201 comprises means for controlling the transmit power of the second communication unit 207. Specifically, a power control loop is operated such that the transmit power of the second communication unit is set in response to the receive characteristic of the base station 201. Preferably, the transmit power of the second communication unit 207 is controlled such that it results in a receive signal level comparable to that expected of the access message. Accordingly, the receive gain will be set appropriately for both communications thereby reducing the risk of saturating the receiver and facilitating the joint decision process.

The invention can be implemented in any suitable form including hardware, software, firmware or any combination of these. However, preferably, the invention is implemented as software running on one or more data processors. The functional modules, elements and components of an embodiment of the invention may be located in the core network, the radio access network or any suitable physical or functional location as suitable. Indeed functionality may be implemented in a single unit, in a plurality of units or as part of other functional units.

Although the present invention has been described in connection with the preferred embodiment, it is not intended to be limited to the specific form set forth herein. Rather, the scope of the present invention is limited only by the accompanying claims. In the claims, the term comprising does not exclude the presence of other functionality, elements or steps. Furthermore, although individually listed, a plurality of functionality, means, elements or method steps may be implemented by e.g. a single unit or processor. Additionally, although individual features may be included in different claims, these may possibly be advantageously combined, and the inclusion in different claims does not imply that a combination of features is not feasible and/or advantageous. In addition, singular references do not exclude a plurality. Thus references to "a", "an", "first", "second" etc do not preclude a plurality.

**Claims**

1. A communication system for supporting communication units over communication channels; the communication system comprising:

   - means for allocating a first communication channel of a plurality of communication channels to a first communication unit for a data service;
   - means for allocating the first communication channel to a second communication unit during a data pause of the first communication unit;
   - means for the first communication unit to transmit an access message in response to detection of data activity;
   - means for receiving the access message on the first communication channel; and
   - means for re-allocating the first communication channel to the first communication unit in response to receiving the access message,

   wherein the access message is a predetermined access message common for a first group of communication units.

2. A communication system as claimed in claim 1 wherein the data service is a speech service, the data pause is a speech pause and the data activity is speech activity.
   Speech services typically comprise significant pauses and accordingly the invention may specifically allow for an efficient and reliable method of using a communication channel during speech pauses with negligible impact on the speech service.

3. A communication system as claimed in claim 1 or 2 comprising a plurality of groups of communication units each having an associated common predetermined access message, and comprising means for selecting the access message from the plurality of common predetermined access messages.

4. A communication system as claimed in claim 3 wherein the communication system is a cellular communication system and each group of communication units comprise the communication units associated with a cell.

5. A communication system as claimed in claim 4 wherein the means for selecting is operable to select an access message in response to a cell identification received from a base station of a serving cell.

6. A communication system as claimed in claim 4 or 5 wherein the means for selecting is operable to select an access message in response to a known data sequence of the second communication unit.

7. A communication system as claimed in claim 6 wherein the known data sequence is a training sequence.

8. A communication system as claimed in claim 6 or 7 as dependent on claim 4 wherein the means for selecting are operable to determine the known data sequence from the cell identification.

9. A communication system as claimed in claim 8 wherein each cell has a single associated known data sequence.

10. A communication system as claimed in any previous claim 3 to 9 wherein the means for receiving the access message is operable to detect the access message while receiving a transmission of the second communication unit.

11. A communication system as claimed in claim 10 wherein the means for receiving the access message is operable to decode the transmission of the second communication unit.

12. A communication system as claimed in any previous claim 3 to 11 wherein the common predetermined access messages are associated with known data patterns of transmissions of communication units of the group associated with each common predetermined access message.

13. A communication system as claimed in claim 12 wherein the association between common predetermined access messages and the known data patterns are such that detection of common predetermined access messages in the presence of transmissions of other communication units are facilitated.

14. A communication system as claimed in claims 12 to 13 wherein the association between common predetermined access messages and the known data patterns are such that a deterioration of a decode ability on the data from the second communication unit is reduced.

15. A communication system as claimed in any of the claims 12 to 14 wherein the association between common predetermined access messages and the known data patterns are such that correlation between a common predetermined access message and transmissions of communication units is lowest for the group of communication units associated with the common predetermined access message.

16. A communication system as claimed in any of the previous claims 12 to 15 wherein the common predetermined access messages comprise a first part associated with the known data patterns and a second part associated with an unknown data part of transmissions of communication units of the group associated with each common predetermined access message.

17. A communication system as claimed in any previous claim 12 to 16 wherein the known data patterns are training sequences.

18. A communication system as claimed in any previous claim wherein the access message comprises a substantially sinusoidal signal.

19. A communication system as claimed in claim 18 wherein the access message consists in a substantially sinusoidal signal.

20. A communication system as claimed in any previous claim wherein the access message comprises no information.

21. A communication system as claimed in any previous claim further comprising means for setting a transmit power of the access message in response to a transmit power of a previous communication from the first communication unit.

22. A communication system as claimed in claim 21 further comprising means for setting a receive characteristic for the means for receiving the access message to a level determined for a previous communication from the first communication unit.

23. A communication system as claimed in claim 22 further comprising means for setting a transmit power of the second communication unit in response to the receive characteristic for the means for receiving the access message.

24. A communication system as claimed in any previous claim, wherein the means for the first communication unit to transmit an access message is operable to transmit a plurality of access messages.

25. A communication system as claimed in any previous claim, wherein the means receiving the access message is operable to combine a plurality of access messages.

26. A communication system as claimed in any previous claim, wherein the first communication channel is a time division multiple access (TDMA) communication channel.

27. A communication system as claimed in claim 26, wherein the TDMA communication channel comprises a Global System for Mobile communication (GSM) time slot structure.

28. A communication unit for a communication system supporting communication units over communication channels; the communication unit comprising:

   - means receiving an allocation of a first communication channel of a plurality of communication channels for a data service;
   - means for releasing the first communication channel to a second communication unit during a data pause of the communication unit;
   - means for transmitting an access message in response to detection of activity;
   - means for resuming data communication on the first communication channel,

      wherein the access message is a predetermined access message common for a first group of communication units.

29. A communication unit as claimed in claim 28 further comprising means for selecting the access message from a plurality of predetermined access messages in response to a cell identification received from a base station of a serving cell.

30. A communication unit as claimed in claim 28 or 29 further comprising means for setting a transmit power of the access message in response to a transmit power of a previous communication from the communication unit.

31. A base station for a cellular communication system supporting communication units over communication channels; the base station comprising:

- means for transmitting an allocation of a first communication channel of a plurality of communication channels to a first communication unit for a data service;
- means for receiving a communication on the first communication channel from a second communication unit during a data pause of the first communication unit;
- means for receiving a activity access message from the first communication unit; and
- means for re-allocating a receiver function associated with the first communication channel to the first communication unit in response to receiving the access message;

wherein the access message is a predetermined access message common for a first group of communication units.

32. A method of channel allocation for a communication system supporting communication units over communication channels; the communication system comprising:

- allocating a first communication channel of a plurality of communication channels to a first communication unit for a data service;
- allocating the first communication channel to a second communication unit during a data pause of the first communication unit;
- transmitting an access message from the first communication unit in response to detection of activity;
- receiving the access message on the first communication channel; and
- re-allocating the first communication channel to the first communication unit in response to receiving the access message,

wherein the access message is a predetermined access message common for a first group of communication units.

33. A computer program enabling the carrying out of a method according to claim 32.

34. A record carrier comprising a computer program as claimed in claim 33.

-PRIOR ART-

*FIG. 1*

EP 1 435 746 A1

FIG. 2

**201** (device box containing:)

215 — Communication Channel Allocator

Speech Interval Controller — 217

221 — Access Message Selector

223 — Access Message Memory

213 — Time Slot Controller

203 — Transceiver

Access Message Receive Processor — 219

**205** (device box containing:)

231 — Reduced Transmission Processor

Transceiver — 225

233 — Access Message Generator

Speech Detector

229

Vocoder — 227

235 — Cell Access Message Selector

237 — Cell Access Message Memory

211

209

207

15

EP 1 435 746 A1

FIG. 3

**Transmission from second communication unit**

| Data | Training Sequence | Data |
|---|---|---|

305      307      305

301

**Access Message**

| Part 1 | Part 2 | Part 1 |
|---|---|---|

303

309      311      309

EP 1 435 746 A1

16

**European Patent Office**

**EUROPEAN SEARCH REPORT**

Application Number

EP 02 29 3273

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | WO 01 37451 A (MOTOROLA INC) 25 May 2001 (2001-05-25) <br> * page 4, line 6-14,23,24 * <br> * page 5, line 14-31 * <br> * page 6 * <br> * page 7, line 5-31 * <br> * page 8, line 7-31 * <br> * page 9, line 1-31 * <br> * page 10, line 1-31 * <br> * page 11, line 15-27 * <br> * page 12, line 11-31 * <br> --- | 1-34 | H04Q7/38 |
| Y | US 5 513 183 A (CORRIGAN III JOHN E ET AL) 30 April 1996 (1996-04-30) <br> * column 8, line 7-21 * <br> * column 14, line 60 - column 15, line 16 * <br> * column 15, line 46 - column 16, line 29 * <br> --- | 1-34 | |
| A | WO 00 31996 A (ERICSSON TELEFON AB L M) 2 June 2000 (2000-06-02) <br> * page 3, line 9-21 * <br> * page 4, line 10-20 * <br> * page 5, line 19 - page 6, line 8 * <br> * page 10, line 13-21 * <br> * page 21, line 17-19 * <br> * page 22, line 10-19 * <br> * page 27, line 5-21 * <br> * page 31, line 4-7 * <br> --- | 1-34 | TECHNICAL FIELDS SEARCHED (Int.Cl.7) <br><br> H04Q <br> H04J <br> H04L <br> H04B |
| A | US 6 038 238 A (JOKINEN HARRI ET AL) 14 March 2000 (2000-03-14) <br> * column 2, line 66 - column 3, line 10 * <br> * column 3, line 31-45 * <br> * figure 1 * <br> * column 5, line 37-65 * <br> --- <br> -/-- | 6-17 | |

The present search report has been drawn up for all claims

| Place of search | Date of completion of the search | Examiner |
|---|---|---|
| MUNICH | 31 March 2003 | Mele, M |

EPO FORM 1503 03.82 (P04C01)

**European Patent Office**

## EUROPEAN SEARCH REPORT

Application Number

EP 02 29 3273

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 008 953 A (GHISLER WALTER ET AL) 16 April 1991 (1991-04-16) * page 5, line 5 - page 7, line 24 * ----- | 21-23 | |

TECHNICAL FIELDS SEARCHED (Int.Cl.7)

The present search report has been drawn up for all claims

| Place of search | Date of completion of the search | Examiner |
|---|---|---|
| MUNICH | 31 March 2003 | Mele, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 29 3273

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2003

| Patent document cited in search report | | Publication date | Patent family member(s) | | Publication date |
|---|---|---|---|---|---|
| WO 0137451 | A | 25-05-2001 | EP | 1232580 A1 | 21-08-2002 |
| | | | WO | 0137451 A1 | 25-05-2001 |
| US 5513183 | A | 30-04-1996 | US | 5357513 A | 18-10-1994 |
| | | | US | 5299198 A | 29-03-1994 |
| | | | US | 5703881 A | 30-12-1997 |
| | | | US | 5475689 A | 12-12-1995 |
| | | | US | 5633873 A | 27-05-1997 |
| | | | US | 5537509 A | 16-07-1996 |
| WO 0031996 | A | 02-06-2000 | AU | 2012300 A | 13-06-2000 |
| | | | BR | 9915652 A | 07-08-2001 |
| | | | CA | 2351571 A1 | 02-06-2000 |
| | | | CN | 1333981 T | 30-01-2002 |
| | | | EP | 1133886 A2 | 19-09-2001 |
| | | | JP | 2002531026 T | 17-09-2002 |
| | | | WO | 0031996 A2 | 02-06-2000 |
| | | | TW | 444460 B | 01-07-2001 |
| US 6038238 | A | 14-03-2000 | FI | 950419 A | 01-08-1996 |
| | | | AU | 694928 B2 | 06-08-1998 |
| | | | AU | 4261896 A | 21-08-1996 |
| | | | CH | 691648 A5 | 31-08-2001 |
| | | | CN | 1174636 A ,B | 25-02-1998 |
| | | | DE | 19546577 A1 | 01-08-1996 |
| | | | ES | 2111482 A1 | 01-03-1998 |
| | | | WO | 9624200 A1 | 08-08-1996 |
| | | | FR | 2730117 A1 | 02-08-1996 |
| | | | GB | 2297669 A ,B | 07-08-1996 |
| | | | JP | 10513318 T | 15-12-1998 |
| | | | NL | 1001927 C2 | 22-12-1998 |
| | | | NL | 1001927 A1 | 31-07-1996 |
| | | | SE | 506999 C2 | 16-03-1998 |
| | | | SE | 9504541 A | 01-08-1996 |
| US 5008953 | A | 16-04-1991 | US | 5042082 A | 20-08-1991 |
| | | | AU | 625128 B2 | 02-07-1992 |
| | | | AU | 5530090 A | 16-11-1990 |
| | | | AU | 626123 B2 | 23-07-1992 |
| | | | AU | 5934090 A | 17-01-1991 |
| | | | AU | 625085 B2 | 02-07-1992 |
| | | | AU | 5969890 A | 17-01-1991 |
| | | | BR | 9006720 A | 06-08-1991 |
| | | | BR | 9006823 A | 06-08-1991 |
| | | | BR | 9006824 A | 06-10-1992 |
| | | | CA | 2030607 A1 | 18-10-1990 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 02 29 3273

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2003

| Patent document cited in search report | Publication date | Patent family member(s) | | Publication date |
|---|---|---|---|---|
| US 5008953 A | | CA | 2033340 A1 | 27-12-1990 |
| | | CA | 2033971 A1 | 27-12-1990 |
| | | CN | 1048472 A ,B | 09-01-1991 |
| | | DE | 69021794 D1 | 28-09-1995 |
| | | DE | 69021794 T2 | 22-02-1996 |
| | | DE | 69022307 D1 | 19-10-1995 |
| | | DE | 69022307 T2 | 08-02-1996 |
| | | EP | 0406186 A2 | 02-01-1991 |
| | | EP | 0406193 A2 | 02-01-1991 |
| | | HK | 173995 A | 24-11-1995 |
| | | HK | 180295 A | 01-12-1995 |
| | | JP | 2799244 B2 | 17-09-1998 |
| | | JP | 4500446 T | 23-01-1992 |
| | | JP | 2799245 B2 | 17-09-1998 |
| | | JP | 4500448 T | 23-01-1992 |
| | | KR | 9513303 B1 | 02-11-1995 |
| | | KR | 9702756 B1 | 10-03-1997 |
| | | KR | 9709704 B1 | 17-06-1997 |
| | | NZ | 233178 A | 25-06-1992 |
| | | NZ | 233770 A | 25-09-1992 |
| | | NZ | 233866 A | 28-10-1992 |
| | | PH | 26898 A | 03-12-1992 |
| | | WO | 9013187 A1 | 01-11-1990 |
| | | WO | 9100657 A1 | 10-01-1991 |
| | | WO | 9100658 A1 | 10-01-1991 |
| | | US | 5257401 A | 26-10-1993 |
| | | US | 5200957 A | 06-04-1993 |

EPO FORM P0459